# EUROPEAN PATENT SPECIFICATION

(11) **EP 2 785 577 B1**
(45) Date of publication and mention of the grant of the patent: **11.03.2015**
(21) Application number: 12808457.1
(22) Date of filing: 13.11.2012
(51) Int. Cl.: B62D 35/00, B60J 5/10, E05D 3/12

(54) **VEHICLE BODY REAR STRUCTURE**
HECK-FAHRZEUGKAROSSERIESTRUKTUR
STRUCTURE ARRIÈRE DE CARROSSERIE DE VÉHICULE

(30) Priority: 28.11.2011 JP 2011259599
(43) Date of publication of application: 08.10.2014
(73) Proprietor: TOYOTA JIDOSHA KABUSHIKI KAISHA, Toyota-shi, Aichi-ken, 471-8571 (JP)
(72) Inventor: MATSUSHIRO, Masanori, TOYOTA-SHI, AICHI-KEN 471-8571 (JP); SHUTO, Takahiro, TOYOTA-SHI, AICHI-KEN 471-8571 (JP)
(74) Representative: Intès, Didier Gérard André
(86) International application number: PCT/IB2012/002322
(87) International publication number: WO 2013/080003

(56) References cited:
- FR-A1- 2 425 367
- FR-A1- 2 886 267
- JP-A- 2002 046 658
- US-A1- 2007 200 389
- US-A1- 2009 001 757

## Description

### BACKGROUND OF THE INVENTION

### 1. Field of the Invention

The invention relates to a vehicle body rear structure and, more particularly, to a vehicle body rear structure of a vehicle that includes a glass hatch.

### 2. Description of Related Art

Japanese Patent Application Publication No. 2005-239062 (JP 2005-239062 A) describes a rear structure of a vehicle that includes a glass hatch.

In the rear structure of a vehicle that includes a glass hatch, a rear spoiler is connected to hinges provided at a roof panel; however, the glass hatch is also connected to the hinges at positions that are different from positions at which the rear spoiler is fixed, so the size of each hinge increases.

Further US 2009/0001757 discloses a spoiler device.

### SUMMARY OF THE INVENTION

The invention provides a vehicle body rear structure that is able to use a small-size hinge.

An aspect of the invention provides a vehicle body rear structure that includes: a hinge that is connected to a roof panel; a rear spoiler that is connected to the hinge at a first connecting position; and a glass hatch that is connected to the rear spoiler at a second connecting position that is on a vehicle rear side with respect to the first connecting position.

With the vehicle body rear structure according to the above aspect, the rear spoiler is connected to the hinge that is connected to the roof panel, and the glass hatch is connected to the rear spoiler. Then, the rear spoiler is connected to the glass hatch at the second connecting position that is on the vehicle rear side with respect to the first connecting position between the hinge and the rear spoiler. The roof panel and the rear spoiler are connected to the hinge, but the glass hatch is not connected to the hinge, so it is possible to reduce the size of the hinge in comparison with the case where three components, that is, the roof panel, the rear spoiler and the glass hatch, are connected to the hinge.

In the vehicle body rear structure according to the above aspect, at least part of the rear spoiler ranging from a portion connected to the hinge to a portion connected to the glass hatch may be formed of a metal.

With the vehicle body rear structure according to the above aspect, the part of the rear spoiler ranging from the portion connected to the hinge to the portion connected to the glass hatch is made of a metal having a higher stiffness than a synthetic resin, FRP, or the like. By so doing, it is possible to obtain a high stiffness for supporting the glass hatch, and it is possible to easily and reliably fasten the glass hatch with the use of a bolt, a nut, and the like.

The vehicle body rear structure according to the above aspect further includes a reinforcement member that couples the first connecting position to the second connecting position. In addition, in this case, the rear spoiler includes a spoiler outer arranged to be oriented toward an outer side of a vehicle body and a spoiler inner arranged to be oriented toward an inner side of the vehicle body, and the reinforcement member may be arranged between the spoiler inner and the spoiler outer.

With the vehicle body rear structure according to the above aspect, the reinforcement member extends from the first connecting position, at which the hinge is connected to the rear spoiler, to the second connecting position, at which the rear spoiler is connected to the glass hatch, so the glass hatch is firmly coupled to the hinge as compared with when the glass hatch is coupled to the hinge via only the rear spoiler. Furthermore, the reinforcement member is arranged between the spoiler and the spoiler outer, so the reinforcement member is hidden at the time when the glass hatch is opened, and is not seen.

In the vehicle body rear structure according to the above aspect, the roof panel may have a step that is recessed downward at its rear end portion, the hinge may be connected at the step, and the rear spoiler may be arranged on a vehicle rear side of the roof panel such that an upper face of the rear spoiler is aligned along an extension of an upper face of the roof panel

With the vehicle body rear structure according to the above aspect, the upper face of the rear spoiler is arranged on the vehicle rear side of the roof panel so as to be aligned along the extension of the upper face of the roof panel, so it is possible to obtain high aerodynamic performance. The hinge is connected at the step that is recessed downward at the rear end portion of the roof panel, so it is possible to mount the rear spoiler such that the upper face of the rear spoiler connected to the hinge does not project upward from the extension of the upper face of the roof panel.

In the vehicle body rear structure according to the above aspect, the spoiler outer may be a molded product of synthetic resin.

When the spoiler outer that is visible from the outside is formed of a molded product of synthetic resin, it is possible to easily form the spoiler outer into a complex shape as compared with the spoiler outer made of a sheet metal, so it is possible to improve designability as compared with a product made of a sheet metal.

As described above, with the vehicle body rear structure according to the aspect of the invention, it is possible to use an existing hinge that is not large in size.

With the vehicle body rear structure according to the aspect of the invention, it is possible to obtain a high stiffness for supporting the glass hatch.

With the vehicle body rear structure according to the aspect of the invention, it is possible to make the reinforcement member invisible.

With the vehicle body rear structure according to the aspect of the invention, it is possible to obtain high aerodynamic performance.

With the vehicle body rear structure according to the aspect of the invention, it is possible to improve designability.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a longitudinal cross-sectional view in a vehicle longitudinal direction, showing a region around a hinge portion of a vehicle body rear structure according to a first embodiment;
FIG. 2 is a perspective view of the vehicle body rear structure according to the first embodiment;
FIG 3 is a longitudinal cross-sectional view in the vehicle longitudinal direction, showing a region around a fastening portion between a glass hatch and a rear spoiler and showing the vehicle body rear structure according to the first embodiment;
FIG. 4 is a longitudinal cross-sectional view in the vehicle longitudinal direction, showing a vehicle body rear structure according to a related art;
FIG. 5 is a perspective view of the vehicle body rear structure according to the related art;
FIG. 6 is a longitudinal cross-sectional view in the vehicle longitudinal direction, showing a region around a hinge portion of the vehicle body rear structure according to the related art; and
FIG. 7 is a longitudinal cross-sectional view in a vehicle longitudinal direction, showing a region around a hinge portion of a vehicle body rear structure according to a second embodiment.

### DETAILED DESCRIPTION OF EMBODIMENTS

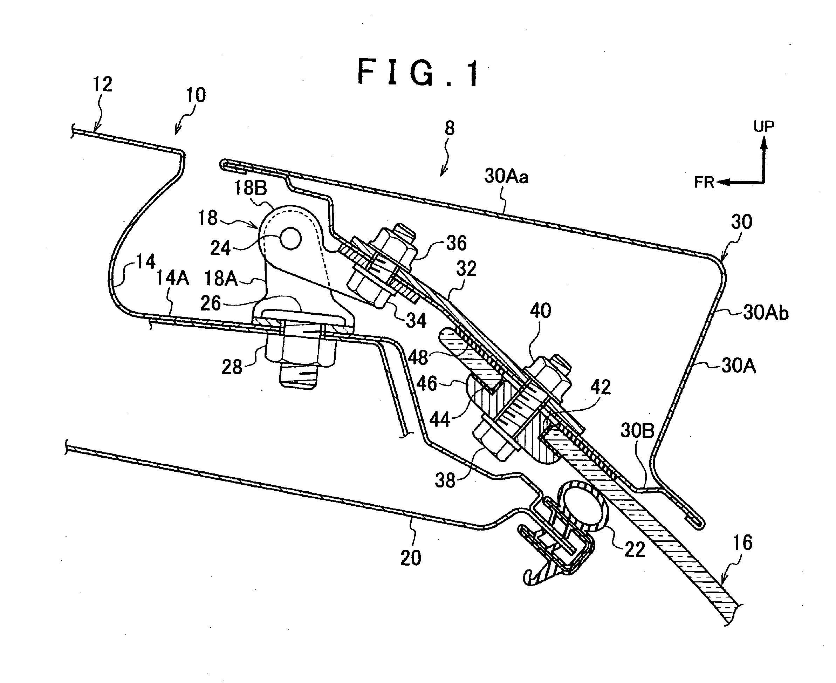

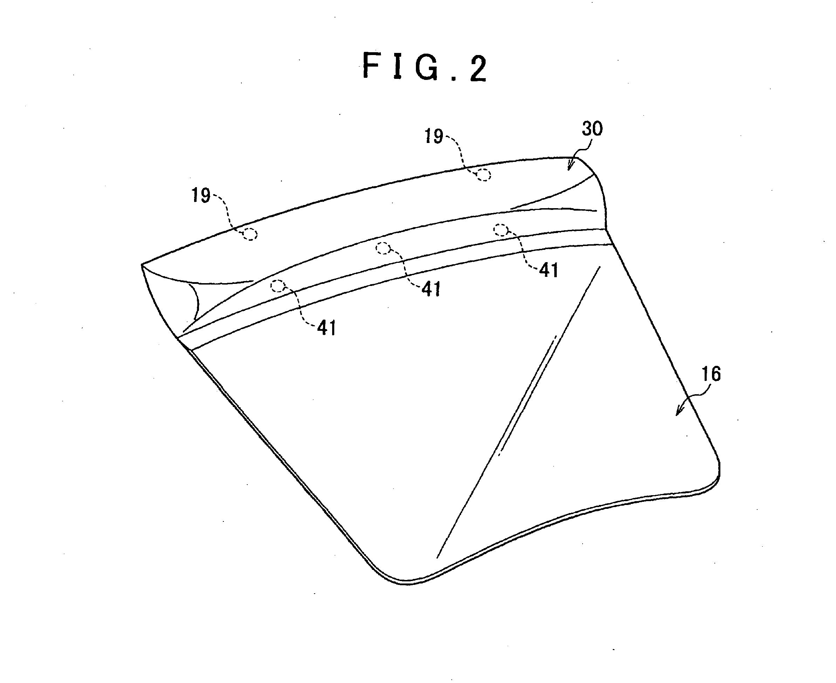

Hereinafter, a vehicle body rear structure 8 according to a first embodiment of the invention will be described with reference to FIG. 1 to FIG. 5. Note that, in these drawings, an arrow FR indicates a vehicle front side, and an arrow UP indicates a vehicle upper side. FIG. 1 shows a cross-sectional view of a relevant portion of the vehicle body rear structure 8 according to the present embodiment. As shown in FIG. 1, a step 14 is formed at the rear side of a roof panel 12 of a vehicle 10. The step 14 extends in a vehicle width direction. Hinges 18 are connected to a bottom 14A of the step 14 at both sides in the vehicle width direction (see FIG. 2). The hinges 18 are used to support a glass hatch 16 such that the glass hatch 16 is openable. Note that, in FIG. 2, the reference numerals 19 denote fastening positions (first connecting position according to the aspect of the invention) between the hinges 18 and a rear spoiler 30 (described later).

Note that the roof panel 12 is curved so as to be recessed downward toward a vehicle rear side. In addition, a weather strip 22 is attached to a joint with a roof header 20 at the rear end of the roof panel 12.

Each of the hinges 18 includes a roof-side mounting portion 18A and a hatch-side mounting portion 18B. The roof-side mounting portion 18A is connected to the roof panel 12. The hatch-side mounting portion 18B is pivotably supported by the roof-side mounting portion 18A via a shaft 24. The roof-side mounting portion 18A is fixed to the roof panel 12 by a bolt 26 and a nut 28.

The rear spoiler 30 is arranged on the vehicle rear side of the roof panel 12. The rear spoiler 30 includes a rear spoiler outer 30A and a rear spoiler inner 30B. The rear spoiler outer 30A and the rear spoiler inner 30B according to the present embodiment are formed of a steel sheet.

The rear spoiler outer 30A includes an upper face portion 30Aa and a rear face portion 30Ab. The upper face portion 30Aa is arranged along an extension of the upper face of the roof panel 12. The rear face portion 30Ab extends downward from the vehicle rear end side of the upper face portion 30Aa.

The rear spoiler inner 30B is provided so as to couple the vehicle front end side of the upper face portion 30Aa of the rear spoiler outer 30A to the lower end side of the rear face portion 30Ab. The front end portion of the rear spoiler inner 30B is fixed to the vehicle front end side of the upper face portion 30Aa of the rear spoiler outer 30A by hemming. The rear end portion of the rear spoiler inner 30B is fixed to the lower end side of the rear face portion 30Ab of the rear spoiler outer 30A by hemming. By so doing, the longitudinal cross-sectional shape of the rear spoiler 30 in the vehicle longitudinal direction is a substantially triangular shape.

In a state where the glass hatch 16 is closed, only the rear spoiler outer 30A is visible from the outside, and the rear spoiler inner 30B is hidden by the rear spoiler outer 30A and is invisible from the outside. Note that the glass hatch 16 is an opening/closing mechanism used in a hatchback, or the like, and is a mechanism that allows a baggage, such as a small article, to be loaded or unloaded by opening or closing only a glass portion without opening or closing a flip-up tailgate (hatch).

A reinforcement 32 is arranged on the upper face (adjacent to the rear spoiler outer, and inside the rear spoiler 30) of the rear spoiler inner 30B. The reinforcement 32 is formed of a steel sheet thicker than the steel sheet that constitutes the rear spoiler 30. The front end side of the rear spoiler inner 30B, the front end side of the reinforcement 32 and the hatch-side mounting portion 18B of each hinge 18 are fastened to one another by a bolt 34 and a nut 36. On the other hand, the rear end side of the rear spoiler inner 30B, the rear end side of the reinforcement 32 and the upper end side of the glass hatch 16 are coupled to one another by a bolt 38 and a nut 40, as will be described below.

Holes 42 are formed in the glass hatch 16. Annular retainers 46 are respectively inserted in the holes 42 via annular rubber sheets 44. In addition, a rubber sheet 48 is arranged between the glass hatch 16 and each reinforcement 32. The glass hatch 16 is connected to the rear spoiler 30 in the following manner. The bolts 38 respectively extend through the retainers 46, the rubber sheets 48 and the reinforcements 32, and are respectively screwed to the nuts 40.

Note that the reference numerals 41 in FIG. 2 denote fastening positions (second connecting position according to the aspect of the invention) between the rear spoiler 30 and the glass hatch 16. In the vehicle body rear structure 8 according to the present embodiment, the hinges 18 and the glass hatch 16 are spaced apart from each other, and the glass hatch 16 is coupled to the hinges 18 via the rear spoiler 30 and the reinforcements 32.

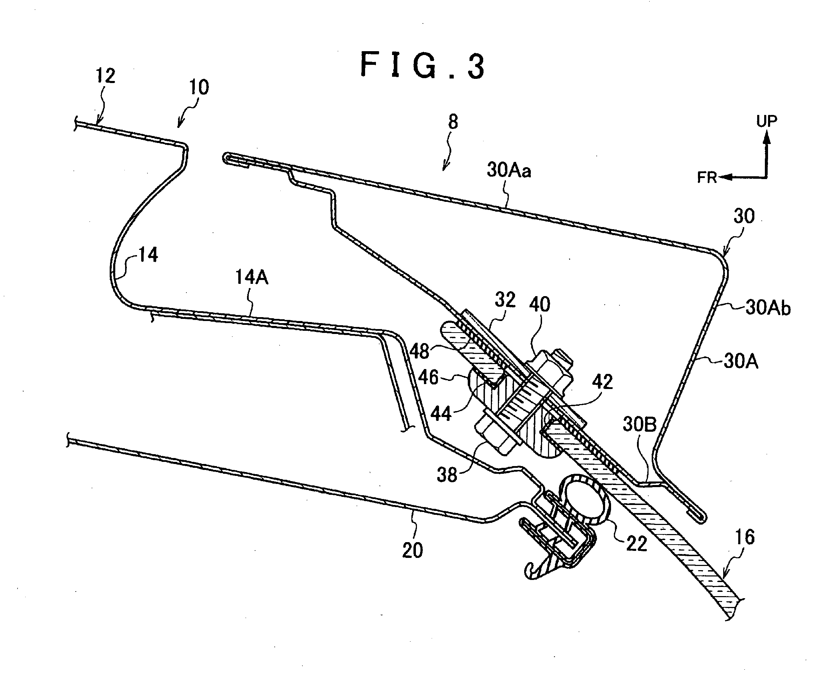

As shown in FIG. 3, at the center of the rear spoiler 30 in the width direction, the glass hatch 16 is fastened to the rear spoiler 30 using the bolt 38, the retainer 46, the rubber sheet 44, the rubber sheet 48, the reinforcement 32 and the nut 40.

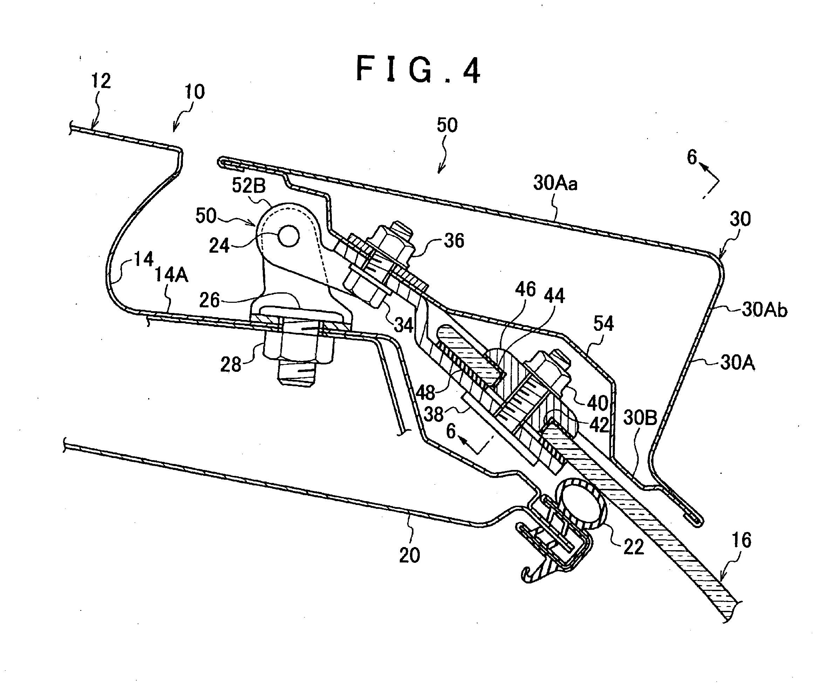

Before the operations and advantageous effects of the vehicle body rear structure 8 according to the present embodiment are described, the operations and advantageous effects of a vehicle body rear structure 50 according to a related art will be described with reference to FIG. 4 to FIG. 6. Note that, in the vehicle body rear structure 50 according to the related art, like reference numerals denote the same components as those of the embodiment, and the description thereof is omitted. As shown in FIG. 4, each hinge 52 of a vehicle body rear structure 50 according to the related art includes a portion that connects the rear spoiler 30 to the hatch-side mounting portion 52B and a portion that connects the glass hatch 16 to the hatch-side mounting portion 52B, and the hatch-side mounting portion 52B is longer than the hatch-side mounting portion 18B (see FIG. 1) according to the present embodiment. That is, the hinges 52 according to the related art are exclusive products that are used to mount two components, that is, the rear spoiler 30 and the glass hatch 16, to the hatch-side mounting portion 52B at respectively different positions, so the size is large.

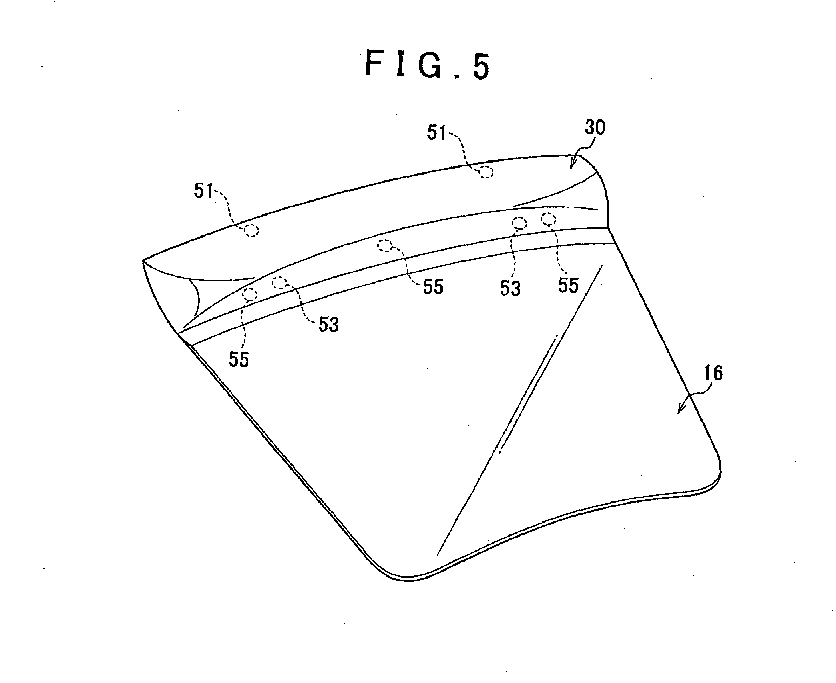

FIG. 5 shows the fastening positions of the glass hatch 16, rear spoiler 30 and hinges 52 of the vehicle body rear structure 50 according to the related art. In FIG. 5, the reference numerals 51 denote the fastening positions between the hinges 52 and the rear spoiler 30, the reference numerals 53 denote the fastening positions between the hinges 52 and the glass hatch 16 and the reference numerals 55 denote the fastening positions between the glass hatch 16 and the rear spoiler 30. As shown in FIG. 5, in the vehicle body rear structure 50 according to the related art, the rear spoiler 30 and the glass hatch 16 are fastened to each other at the right, left and center three portions of the glass hatch 16, and the rear spoiler 30 and the glass hatch 16 are fastened to each other at both right and left two portions of the glass hatch 16. Therefore, the weight of each fastening component is large, and five holes need to be perforated through the glass hatch 16, so work for machining the glass hatch 16 is complicated.

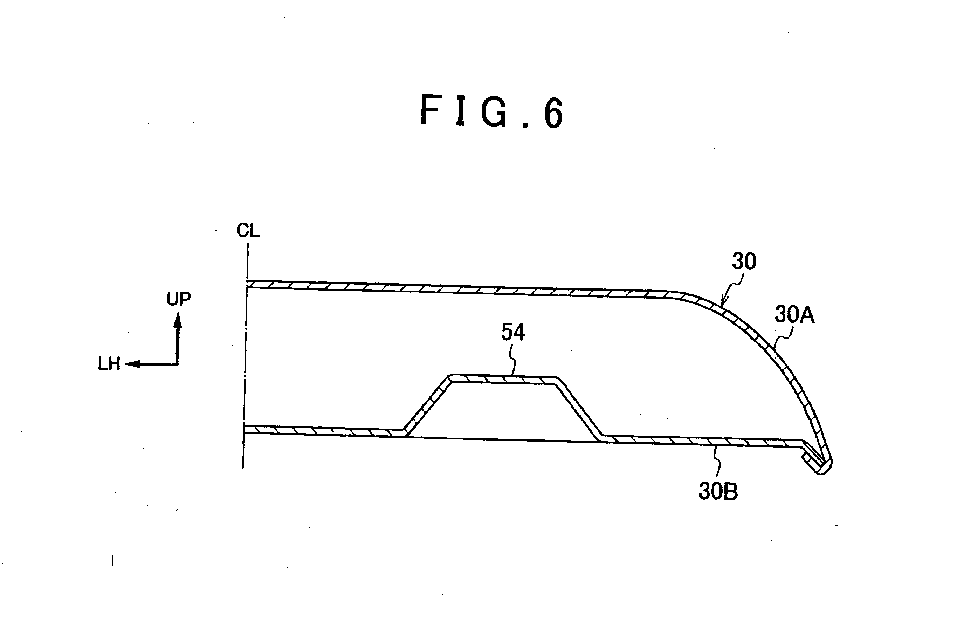

Furthermore, in the vehicle body rear structure 50 according to the related art, as shown in FIG. 4, the bolts 38 and the nuts 40 that fasten the hinges 52 to the glass hatch 16 protrude toward the rear spoiler 30, so, as shown in FIG. 4 and FIG. 6, right and left two deep recesses 54 that relieve the bolts 38 and the nuts 40 (FIG. 6 shows only the rear spoiler 30) need to be formed in the rear spoiler inner 30B of the rear spoiler 30. Thus, in comparison with the case where no recess 54 is formed, work for machining a die for press molding the rear spoiler inner 30B is complicated, so cost increases.

Next, the operations and advantageous effects of the vehicle body rear structure 8 according to the present embodiment will be described. As shown in FIG. 1, in the vehicle body rear structure 8 according to the present embodiment, the rear spoiler 30 is connected to the hatch-side mounting portions 18B of the hinges 18, but the glass hatch 16 is not connected to the hatch-side mounting portions 18B of the hinges 18. Therefore, in comparison with the case where the three components, that is, the roof panel 12, the rear spoiler 30 and the glass hatch 16 are connected to the hatch-side mounting portions 52B as in the case of the hinges 52 according to the related art, it is possible to suppress an increase in the size of each hinge 18, so the hinges 18 according to the present embodiment do not need to be large exclusive products as in the case of the related art. Thus, the hinges 18 may be small in size and standard ones.

Furthermore, in the vehicle body rear structure 8 according to the present embodiment, the glass hatch 16 is fastened at the two reinforcements 32 respectively connected to the right and left hinges 18 and one center portion of the glass hatch 16 in the width direction, that is, three portions in total, as shown in FIG. 2. Therefore, as compared with the related art, the number of fastening holes formed in the glass hatch 16 is reduced, so work for machining the glass hatch 16 is reduced. Thus, it is possible to reduce cost for machining the glass hatch 16.

In the vehicle body rear structure 8 according to the present embodiment, the glass hatch 16 is fastened to the rear spoiler inner 30B, the bolts 38 used for the fastening protrude inside the rear spoiler 30 and the nuts 40 are screwed to the protruded portions, so it is not necessary to form the deep recesses 54, which relieve the bots and nuts, in the rear spoiler inner 30B unlike the related art. The rear spoiler inner 30B according to the present embodiment has no deep recesses 54 as compared with the rear spoiler inner 30B according to the related art, so it is easy to machine the die for press molding the rear spoiler inner 30B, and it is possible to reduce cost.

In addition, in the present embodiment, the reinforcements 32 are arranged inside the rear spoiler 30. Therefore, the reinforcements 32 are not visible irrespective of whether the glass hatch 16 is opened or closed, so the appearance is good.

In the vehicle body rear structure 8 according to the present embodiment, the hinges 18 are connected at the step 14 that is recessed downward at the rear end portion of the roof panel 12. Therefore, it is possible to form the upper face portion 30Aa of the rear spoiler 30 connected to the hinges 18 such that the upper face portion 30Aa does not protrude upward from the extension of the upper face of the roof panel 12, so it is possible to obtain high aerodynamic performance.

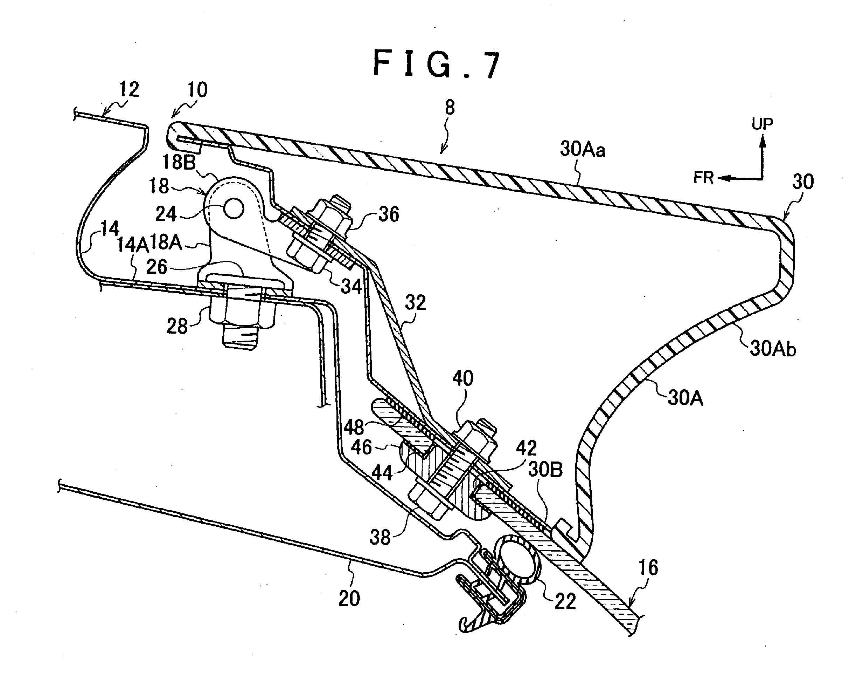

A vehicle body rear structure according to a second embodiment of the invention will be described. Note that like reference numerals denote the same components as those of the first embodiment and the description thereof is omitted. As shown in FIG. 7, the rear spoiler 30 according to the present embodiment is made of a material different from the material of the rear spoiler 30 according to the first embodiment, the rear spoiler inner 30B is made of a sheet metal, and the rear spoiler outer 30A is made of a molded produced of synthetic resin. The rear spoiler inner 30B according to the present embodiment, which is a molded product of synthetic resin, is able to easily implement a complex shape as compared with a product made of a sheet metal, so it is possible to improve designability.

Note that the rear spoiler inner 30B and the reinforcements 32 according to the present embodiment are slightly different in shape from the rear spoiler inner 30B and the reinforcements 32 according to the first embodiment; however, the functions are completely the same, and, of course, it is possible to obtain similar operations and advantageous effects to those of the first embodiment.

In the above-described embodiment, the glass hatch 16 is supported by the hinges 18 via the rear spoiler 30 and the reinforcements 32. However, the invention is not limited to this configuration. The reinforcements 32 may be omitted as long as the stiffness of the rear spoiler 30 is ensured.

## Claims

1. A vehicle body rear structure (8) comprising:
a hinge (18) connected to a roof panel (12);
a rear spoiler (30) connected to the hinge (18) at a first connecting position (19);
and
a glass hatch (16) connected to the rear spoiler (30) at a second connecting position (41) that is on a vehicle rear side with respect to the first connecting position (19),
the vehicle body rear structure (8) **characterized by** further comprising:
a reinforcement member (32) that extends from the first connecting position (19) to the second connecting position (41), wherein
the rear spoiler (30) includes a spoiler outer (30A) arranged to be oriented toward an outer side of a vehicle body and a spoiler inner (30B) arranged to be oriented toward an inner side of the vehicle body, and
the reinforcement member (32) is arranged between the spoiler inner (30B) and the spoiler outer (30A).

2. The vehicle body rear structure (8) according to claim 1, wherein
at least part of the rear spoiler (30) ranging from a portion connected to the hinge (18) to a portion connected to the glass hatch (16) is formed of a metal.

3. The vehicle body rear structure (8) according to claims 1 or 2, wherein
the roof panel (12) has a step (14) that is recessed downward at a rear end portion of the roof panel (12),
the hinge (18) is connected at the step (14), and
the rear spoiler (30) is arranged on a vehicle rear side of the roof panel (12) such that an upper face of the rear spoiler (30) is aligned along an extension of an upper face of the roof panel (12).

4. The vehicle body rear structure (8) according to claim 4, wherein
the spoiler outer (30A) is a molded product of synthetic resin.

## Patentansprüche

1. Fahrzeugkarosserie-Heckkonstruktion (8), umfassend:
ein Gelenk (18), das mit einem Dachpaneel (12) verbunden ist,
einen Heckspoiler (30), der an einer ersten Verbindungsposition (19) mit dem Gelenk (18) verbunden ist, und
eine gläserne Heckklappe (16), die an einer zweiten Verbindungsposition (41), welche in Bezug auf die erste Verbindungsposition (19) weiter rückwärts am Fahrzeug angeordnet ist, mit dem Heckspoiler (30) verbunden ist,
wobei die Fahrzeugkarosserie-Heckkonstruktion (8) **dadurch gekennzeichnet ist, dass** sie ferner umfasst:
ein Verstärkungsglied (32), das sich von der ersten Verbindungsposition (19) zu der zweiten Verbindungsposition (41) erstreckt, wobei
der Heckspoiler (30) ein Spoileraußenteil (30A), das derart angeordnet ist, dass es in Richtung einer Außenseite der Fahrzeugkarosserie weist, und ein Spoilerinnenteil (30B), das derart angeordnet ist, dass es in Richtung einer Innenseite der Fahrzeugkarosserie weist, umfasst, und
das Verstärkungsglied (32) zwischen dem Spoilerinnenteil (30B) und dem Spoileraußenteil (30A) angeordnet ist.

2. Fahrzeugkarosserie-Heckkonstruktion (8) nach Anspruch 1, wobei
mindestens ein Teil des Heckspoilers (30), der sich von einem Abschnitt, welcher mit dem Gelenk (18) verbunden ist, zu einem Abschnitt, welcher mit der gläsernen Heckklappe (16) verbunden ist, erstreckt, aus einem Metall geformt ist.

3. Fahrzeugkarosserie-Heckkonstruktion (8) nach Anspruch 1 oder 2, wobei
das Dachpaneel (12) eine Stufe (14) aufweist, die an einem hinteren Endabschnitt des Dachpaneels (12) in Abwärtsrichtung ausgespart ist,
das Gelenk (18) an der Stufe (14) verbunden ist, und
der Heckspoiler (30) an einer Fahrzeugrückseite des Dachpaneels (12) derart angeordnet ist, dass eine obere Fläche des Heckspoilers (30) in einer Linie mit einer Verlängerung einer oberen Fläche des Dachpaneels (12) ausgerichtet ist.

4. Fahrzeugkarosserie-Heckkonstruktion (8) nach Anspruch 4, wobei das Spoileraußenteil (30A) ein geformtes Produkt aus Kunstharz ist.

## Revendications

1. Structure arrière (8) de carrosserie de véhicule comprenant :
une charnière (18) fixée à un panneau de toit (12) ;
un becquet arrière (30) fixé à la charnière (18) au niveau d'une première position de fixation (19) ; et
un hayon vitré (16) fixé au becquet arrière (30) au niveau d'une seconde position de fixation (41) qui est du côté arrière de véhicule par rapport à la première position de fixation (19),
la structure arrière (8) de carrosserie de véhicule étant **caractérisée en ce qu'**elle comprend en outre :
un élément de renfort (32) qui s'étend depuis la première position de fixation (19) jusqu'à la seconde position de fixation (41),
dans laquelle le becquet arrière (30) inclut un extérieur de becquet (30A) agencé de façon à être orienté vers l'extérieur de la carrosserie de véhicule et un intérieur de becquet (30B) agencé de façon à être orienté vers l'intérieur de la carrosserie de véhicule, et
dans laquelle l'élément de renfort (32) est agencé entre l'intérieur de becquet (30B) et l'extérieur de becquet (30A).

2. Structure arrière (8) de carrosserie de véhicule selon la revendication 1, dans laquelle au moins la pièce du becquet arrière (30) allant de la partie fixée à la charnière (18) à la partie fixée au hayon vitré (16) est faite d'un métal.

3. Structure arrière (8) de carrosserie de véhicule selon les revendications 1 ou 2,
dans laquelle le panneau de toit (12) possède une dénivellation (14) qui est en creux vers la partie d'extrémité arrière du panneau de toit (12),
dans laquelle la charnière (18) est fixée au niveau de la dénivellation (14), et
dans laquelle le becquet arrière (30) est agencé sur le côté arrière de véhicule du panneau de toit (12) de façon que la face supérieure du becquet arrière (30) soit alignée dans le prolongement de la face supérieure du panneau de toit (12).

4. Structure arrière (8) de carrosserie de véhicule selon la revendication 4, dans laquelle le becquet arrière (30A) est un produit moulé en résine synthétique.
